(19) Europäisches Patentamt
European Patent Office
Office européen des brevets

(11) **EP 2 414 093 B1**

(12) **EUROPEAN PATENT SPECIFICATION**

(45) Date of publication and mention
of the grant of the patent:
**30.01.2019   Bulletin 2019/05**

(51) Int Cl.:
***B01F 13/10*** *(2006.01)*      ***B01F 5/24*** *(2006.01)*

(21) Application number: **10759081.2**

(86) International application number:
**PCT/NO2010/000113**

(22) Date of filing: **26.03.2010**

(87) International publication number:
**WO 2010/114381 (07.10.2010 Gazette 2010/40)**

(54) **A METHOD AND A MIXING STATION FOR MIXING OF BULK SOLID MATERIALS WITH BROAD PARTICLE SIZE DISTRIBUTION**

VERFAHREN UND MISCHSTATION ZUM MISCHEN VON FESTSTOFFMATERIALIEN MIT BREITER PARTIKELGRÖSSENVERTEILUNG

PROCÉDÉ ET POSTE DE MÉLANGE POUR MÉLANGER DES MATÉRIAUX SOLIDES EN VRAC À LARGE DISTRIBUTION GRANULOMÉTRIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:  **31.03.2009   NO 20091342**

(43) Date of publication of application:
**08.02.2012   Bulletin 2012/06**

(73) Proprietor: **Norsk Hydro ASA**
**0240 Oslo (NO)**

(72) Inventors:
 • **KARLSEN, Morten**
  **N-6884 Øvre Årdal (NO)**
 • **DYRØY, Are**
  **N-3920 Porsgrunn (NO)**

 • **HJELLE, Vidar**
  **N-6884 Øvre Årdal (NO)**

(74) Representative: **Berg, André**
**Hydro Aluminium AS**
**Intellectual Property Department**
**0240 Oslo (NO)**

(56) References cited:
| | |
|---|---|
| CN-A- 86 103 783 | DE-A1- 3 607 485 |
| DE-C- 95 881 | DE-C- 532 633 |
| GB-A- 1 087 022 | GB-A- 2 081 120 |
| GB-A- 2 103 950 | SU-A1- 912 248 |
| US-A- 633 313 | US-A- 2 455 572 |
| US-A- 3 273 864 | US-A- 4 358 205 |
| US-A- 4 358 207 | US-A- 4 358 207 |
| US-A- 4 712 919 | US-A- 5 123 749 |

**Description**

The present invention relates to a method and a station for mixing materials, such as bulk solids materials that have broad particle size distribution. In particular, the invention relates to preparation of anode covering material (ACM) in aluminium industry. Such material is used in electrolysis cells having prebaked anodes, as a covering material on the top and at the sides of the anode blocks as an encapsulating layer above the electrolytic bath.

ACM is a mixture of crushed bath and alumina, primary alumina and/or secondary alumina, in a ratio dependent of the electrolysis technology at the actual site. Such material can consist of a substantial amount of recycled material, for instance bath and/or crust material grabbed out of electrolysis cells when replacing anodes or material removed from butts in a rodding facility.

In most existing installations for mixing of crushed bath and alumina to make ACM, mechanical mixers are used, mostly ordinary batch mixers or just metering plural material streams by screw conveyors at the desired mixing ratio onto belt conveyors. To apply an ACM with homogenous particle distribution is important for heat balance in the cell.

A starting point for the development of the present invention is that crushed bath from aluminium electrolysis cells is a material that will segregate very easily, due to broad particle distribution. Therefore, the methods have to be chosen in such a way that it will counteract segregation. To achieve this, the basic philosophy of homogenization is applied. This will reduce variation in the material stream, which otherwise would have to be corrected by the operator of the mixing apparatus or station. The installation as it is anticipated, will homogenize the incoming material flow, and at any time deliver a material that has improved material properties with regard to homogenisation (even/constant particle size distribution (PSD)).

A correctly configured apparatus for mixing materials, such as a silo, can give as good, and in some cases better mixtures than what can be achieved by ordinary mechanical mixers. The reason for this is that a silo can mix or homogenize a lot larger quantities than what is possible with an ordinary mixer per unit time.

SU 912 248 A1 relates to continuous mixing of bulk materials with particle size not more than 0,5 mm where material contained in two hoppers 5, 6 is feeded onto conveyors 1, 2 respectively and entered into a first mixing chamber 11 via inclined guides 8. The mixing chamber comprises two horizontal sections of perforated plates 13, 14 where the plates of each section are attached at opposite vertical walls inside a rectangular box section. The sections of plates can be arranged for a reciprocating motion. According to the Figure, at least a part of the mixed material will flow in a zig-zag pattern between the plates. The mixed material leaves the mixing changer via an inclined guide and is further directed onto a conveyor 4. The material leaves the conveyor via an inclined guide 8 and enters a second mixing chamber 12 together with a material transported from a hopper 7 via conveyor 3 and inclined guide 8 into the said second mixing chamber. The second mixing chamber 12 is of same construction as that of the first mixing chamber 11 as mentioned above. The mixed material leaves said chamber via an inclined guide 22 and ends in a bin 23.

DE 36 07 485 A1 (corresponding to US 4,818,117) relates to a device for blending dust, powder or coarse particle bulk materials, having a first upper blending device with a cylindrical blending container and a connecting discharge funnel which tapers conically towards a second lower blending device. The second lower blending device having a cylindrical container and a connecting discharge hopper which tapers conically towards the bottom to form an upper and lower mass flow silo. There is a blending pipe installed in the upper blending device which extends approximately to the lower end of the upper discharge funnel. The blending pipe contains inlet openings throughout its whole length for bulk material wherein the concentrically installed blending pipe is vertically subdivided into gravity pipes arranged side by side. Each pipe contains several inlet openings arranged above one another. The blending pipe is constructed cylindrically in the lower end region with the bulk material being transported back via a conveying pipe.

US 2455572 A discloses a silo with a central filling tube having plural openings with various extensions and at various vertical heights arranged along the wall of the filling tube, where said openings communicates with corresponding chambers. Some chambers may have one opening towards the filling tube, other two openings. Some chambers do not have an opening towards the filling tube in the upper part thereof.

Based on the theories of Andrew W. Jenike: Gravity Flow of Bulk Solids, Bulletin 108, Utah University (1961), there is known how to design flow pattern defined as mass-flow and funnel-flow.

A silo consists normally of a parallel section and a converging section (hopper). By dividing the parallel section of a silo into several chambers by internal walls, and then fill them one by one and empty them simultaneously (in accordance to the principles of mass-flow), a mixing/homogenisation will take place. Commonly, such silo can be denoted gravimetric mixer.

In order to explain this concept, the easiest way is to show by an example how it works. Imagine that 300 samples are collected from the flow into the silo, evenly distributed in time. The average here: arithmetric mean (Average), and the standard deviation (Stot), are then calculated, giving the variation with time of the ingoing material, see Table 1. If the samples in Table 1 are filled into a conventional mass-flow silo (without internal chambers) and then discharged, the variation (standard deviation) described by Stot in Table 2 will be the same.

| Sample # | Conventional silo |
|---|---|
| 1 | 7,25 |
| 2 | 7,63 |
| 3 | 14,71 |
| 4 | 12,95 |
| 5 | 7,78 |
| 6 | 7,63 |
| 7 | 15,54 |
| 8 | 8,58 |
| 9 | 10,61 |
| 10 | 15,61 |
| 291 | 6,21 |
| 292 | 15,17 |
| 293 | 11,65 |
| 294 | 9,12 |
| 295 | 5,15 |
| 296 | 9,09 |
| 297 | 15,21 |
| 298 | 7,10 |
| 299 | 8,90 |
| 300 | 10,70 |
| Average | 10,37 |
| $S_{tot}$ | 3,23 |

## Table 1.    Example of input samples

| Sample # | Conventional silo |
|---|---|
| 1 | 7,25 |
| 2 | 7,63 |
| 3 | 14,71 |
| 4 | 12,95 |
| 5 | 7,78 |
| 6 | 7,63 |
| 7 | 15,54 |
| 8 | 8,58 |
| 9 | 10,61 |
| 10 | 15,61 |
| 291 | 6,21 |
| 292 | 15,17 |
| 293 | 11,65 |
| 294 | 9,12 |
| 295 | 5,15 |
| 296 | 9,09 |
| 297 | 15,21 |
| 298 | 7,10 |
| 299 | 8,90 |
| 300 | 10,70 |
| Average | 10,37 |
| $S_{tot}$ | 3,23 |

## Table 2.  Example of calculations concerning homogenisation

To demonstrate the effect of gravimetric mixing in a silo, one can theoretically divide the silo mentioned above into for instance 10 chambers. These chambers are filled one by one with the same material as in Table 1, and a new chamber starts to fill up for each 30 samples.

When material is removed from the outlet of the silo, all chambers will be emptied in parallel or simultaneously, as a consequence of the mass-flow principle in contrast to funnel flow as in previous example. The samples in the various chambers will be mixed with each other. If 30 samples are collected during discharge, the first sample will ideally be an average of sample 1, 31, 61, .... and 271 from Table 1, the second will be the average of 2, 32, 62, ..... and 272, and so on, as shown in Table 2. The standard deviation after discharge will then be what is given by Table 3.

Table 3. Example of calculations concerning homogenisation when using several chambers in a silo

| Chamber 01 | Chamber 02 | Chamber 03 | Chamber 04 | Chamber 05 | Chamber 06 | Chamber 07 | Chamber 08 | Chamber 09 | Chamber 10 | Average |
|---|---|---|---|---|---|---|---|---|---|---|
| 7,25 | 5,12 | 12,60 | 7,70 | 13,77 | 12,25 | 5,74 | 14,91 | 11,30 | 8,48 | 9,91 |
| 7,63 | 5,05 | 6,39 | 7,66 | 15,30 | 6,32 | 5,08 | 7,26 | 12,54 | 12,54 5,98 | 7,98 |
| 14,71 | 5,11 | 10,48 | 9,84 | 5,87 | 6,31 | 8,64 | 10,40 | 15,61 | 15,48 | 10,26 |
| 12,96 | 10,25 | 15,90 | 13,87 | 972 | 1242 | 11,58 | 15,38 | 12,87 | 13,03 | 12,80 |
| 7,78 | 1126 | 5,96 | 7,19 | 15,36 | 10,65 | 9,46 | 11,78 | 9,77 | 7,29 | 9,66 |
| 7,63 | 11,87 | 5,50 | 11,43 | 5,80 | 8,08 | 6,98 | 15,11 | 6,16 | 9,35 | 8,79 |
| 15,54 | 5,87 | 12,31 | 8,74 | 9,47 | 11,99 | 15,07 | 11,55 | 12,46 | 12,67 | 11,57 |
| 8,58 | 8,73 | 6,65 | 11,78 | 6,17 | 1395 | 8,62 | 12,04 | 11,62 | 14,22 | 10,24 |
| 10,61 | 13,37 | 8,34 | 1404 | 11,79 | 8,99 | 11,72 | 15,71 | 7,00 | 5,52 | 10,71 |
| 15,61 | 10,37 | 14,58 | 15,17 | 5,32 | 9,58 | 9,10 | 9,97 | 13,79 | 6,66 | 11,02 |
| 11,11 | 8,40 | 9,57 | 12,11 | 10,00 | 6,06 | 10,31 | 12,12 | 7,71 | 15,17 | 10,26 |
| 14,96 | 12,49 | 13,94 | 15,23 | 11,84 | 1409 | 10,44 | 10,30 | 5,23 | 15,06 | 12,36 |
| 11,16 | 10,81 | 9,46 | 901 | 12,25 | 1345 | 15,05 | 13,48 | 11,82 | 6,48 | 11,30 |
| 7,26 | 9,46 | 7,07 | 12,49 | 983 | 673 | 12,19 | 14,87 | 6,23 | 6,86 | 9,30 |
| 13,07 | 8,65 | 6,72 | 8,59 | 10,47 | 1225 | 7,37 | 10,02 | 5,49 | 11,21 | 9,38 |
| 10,38 | 9,26 | 15,76 | 10,15 | 1347 | 6,61 | 12,43 | 10,70 | 6,47 | 11,41 | 10,66 |
| 8,32 | 5,29 | 6,71 | 1225 | 14,16 | 7,81 | 7,69 | 15,22 | 8,45 | 8,22 | 9,41 |
| 12,37 | 5,20 | 10,43 | 13,74 | 7,76 | 1478 | 14,61 | 13,09 | 12,15 | 8,80 | 11,29 |
| 5,41 | 7,41 | 9,18 | 13,67 | 14,16 | 1435 | 14,58 | 10,06 | 15,08 | 5,48 | 10,94 |
| 5,51 | 6,30 | 7,30 | 9,36 | 545 | 5,50 | 12,23 | 8,04 | 8,76 | 15,27 | 8,37 |
| 9,31 | 12,45 | 7,34 | 14,63 | 8,37 | 10,48 | 11,32 | 7,61 | 15,28 | 6,21 | 10,30 |
| 11,95 | 9,16 | 7,12 | 705 | 515 | 1561 | 9,00 | 13,18 | 8,07 | 15,17 | 10,15 |
| 7,15 | 11,85 | 12,95 | 1325 | 5,65 | 1254 | 6,11 | 15,73 | 15,80 | 11,65 | 11,27 |
| 14,68 | 6,22 | 11,87 | 1308 | 10,40 | 1581 | 10,39 | 8,26 | 11,78 | 9,12 | 11,16 |
| 15,50 | 12,30 | 6,54 | 12,68 | 8,00 | 5,90 | 15,19 | 8,93 | 5,62 | 5,15 | 9,58 |
| 6,80 | 7,19 | 5,21 | 10,86 | 15,73 | 5,80 | 7,54 | 6,01 | 12,51 | 9,09 | 8,67 |
| 14,60 | 15,37 | 7,69 | 13,69 | 676 | 15,53 | 14,57 | 9,82 | 12,49 | 15,21 | 12,57 |
| 6,23 | 11,15 | 8,00 | 7,34 | 6,65 | 14,93 | 13,78 | 7,15 | 14,97 | 7,10 | 9,73 |
| 13,18 | 12,91 | 14,46 | 7,82 | 10,43 | 9,69 | 13,54 | 10,83 | 9,18 | 8,90 | 11,09 |
| 12,34 | 9,24 | 9,83 | 10,82 | 5,87 | 8,35 | 15,13 | 9,71 | 12,48 | 10,70 | 10,45 |
| | | | | | | | | | Average | 10,37 |
| | | | | | | | | | $S_{tot2}$ | 1,18 |

EP 2 414 093 B1

The 30 first samples are filled in the first column of the table, the next 30 in the second column, and so on. Collecting 30 samples during discharge will give the samples shown by the last column, named Average, which are averages of the corresponding numbers in the corresponding samples distributed in the 10 chambers.

As is clearly seen from Tables 1 and 3, the standard deviation $S_{tot}$ of the samples from the filling is considerably larger than the standard deviation $S_{tot2}$ of the samples collected during discharge. In this case the standard deviation is reduced by 68% from filling to discharge of the homogenizing silo. It can be shown theoretically that a homogenizing silo consisting of N chambers, on average will reduce the standard deviation from filling to emptying by a factor of the square root of $N$ ( $\sqrt{N}$ ).

This means that the homogenizing effect improves with increasing number of chambers, but as the number of chambers increases, the effect of an extra chamber diminishes asymptotically.

In order to make such a chamber silo to work, a correct design of the chambers is essential, at the same time as also the silo itself has to be correctly designed.

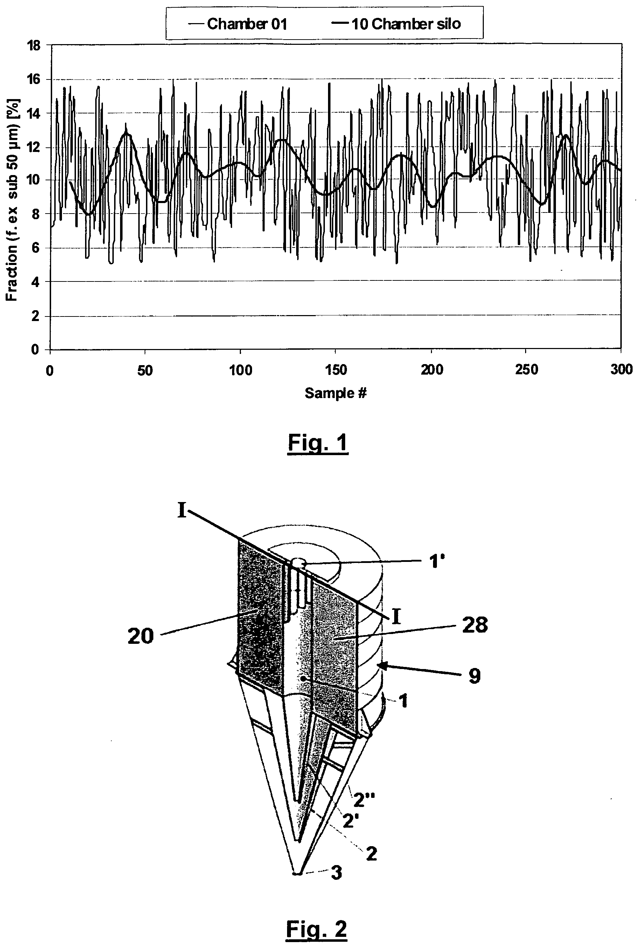

The example given above is illustrated in Fig. 1. As shown in the Figure, the samples associated with conventional silo vary a lot throughout the sampling sequence. If the homogenizing silo of 10 chambers is used, the variations in the discharged material are considerably reduced, as indicated by the curve associated with a 10 chamber silo.

The present invention is based upon the theory and knowledge as given above with regard to gravimetric mixing of material that segregates during transport and handling. In accordance with the invention it is possible to recycle and handle anode covering materials and further mix the material with secondary and/or primary alumina or other material in a efficient and little energy consuming manner.

In accordance to specific embodiments of the invention, it relates to a method as per claim 1 and a station as per claim 6 for mixing bulk solid material, in particular for mixing at least two materials (A, B) where at least one of these materials (A) has a broad particle size distribution. The material (A) is homogenized in a first mixer (5a, 5b) before being mixed together with material (B) in a second mixer (7). The material (A) is homogenized in a gravimetric mixer (5a, 5b) with plural chambers and which is discharged in accordance to the mass flow principle. The materials (A) and (B) are preferably mixed in a gravimetric mixer (7) with plural chambers and is further discharged in accordance to the mass flow principle. The material (A) is substantially crushed bath material. The material (B) is primary and/or secondary alumina that mixed with (A) will be used as recycled anode cover material (ACM).

The above standing and further advantages can be achieved in accordance to the present invention as defined in the accompanying claims **1**- 16.

In the following the present invention shall be described by examples and figures where:

Fig. 1     discloses a sample variation of a conventional silo compared with a homogenizing silo having 10 chambers,

Fig. 2     discloses in perspective, a cut through view along I-I of a mixer divided into chambers

Fig. 3a    discloses a central filling tube of the mixer in Fig. 2, seen in perspective,

Fig. 3b    discloses in part a perspective view of the cylindrical part of the mixer, divided in 16 chambers,

Fig. 4     discloses a frontal, cross sectional view of the mixer of Fig. 2,

Fig. 5     discloses a mixing apparatus or station in accordance to the present invention.

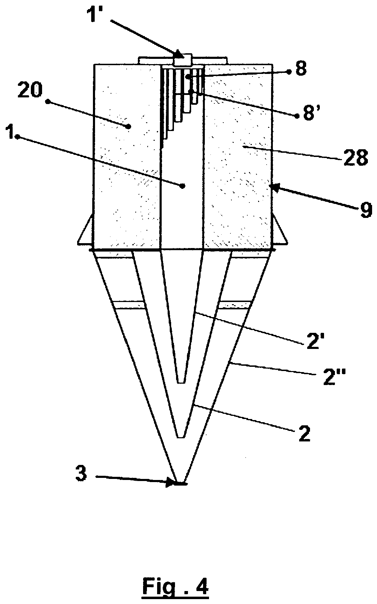

The present invention is based upon the principles of mass-flow in multi chamber silos, where the silos have a mixing function, i.e. hereinafter named mixer. In Figure 2 and 4, there is shown three main items of a mixer. First of all there is a central filling tube 1 arranged in one cylindrical part 9 of the mixer. The filling tube has one inlet opening 1'. In the lower, converging part of the mixer, the hopper 2" has arranged two static flow promoters 2, 2' inside. The outlet is indicated at reference sign 3.

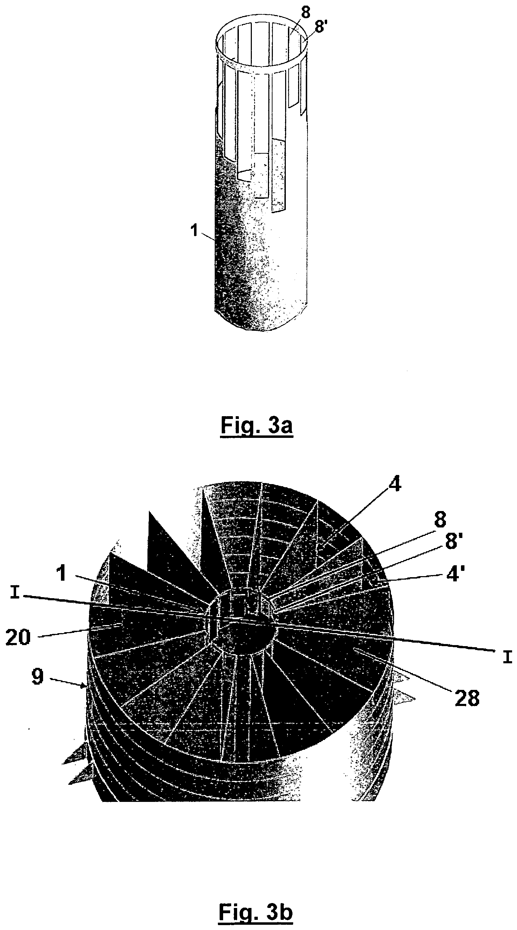

The central filling tube 1 is shown in more details in Fig. 3a. As shown in the Figure, there are several openings or slots as indicated by 8, 8'... in the tube having various vertical extensions, thus distributing the material successively into corresponding chambers 4, 4'... as indicated in Figure 3b. During filling of materials into the central filling tube, the slots in the tube will distribute materials to each chamber successively, due to the arrangement of the slots.

The cylindrical part 9 of the mixer is in more detail disclosed in Fig. 3b, where the upper part of the filling tube 1 is disclosed together with chambers 4, 4'. Slots 8, 8' in the filling tube communicates with the chambers 4, 4'. Line I-I along internal dividing walls 20, 28 indicates the same cut through plane as that of Fig. 2 and 4.

As shown in Fig. 4, that is a frontal view of Fig. 1, the filling tube 1 is arranged in the cylindrical part of the mixer having openings or slots 8, 8' allowing material filled into the filling tube 1 to be distributed into the various chambers of the mixer.

During removal of materials from the silo, the static flow promoters 2, 2' are designed to support that materials are removed from the chambers in accordance with the mass flow principle, and consequently these will discharge simultaneously, hence mixing/ homogenising the bulk solid filled into the mixer.

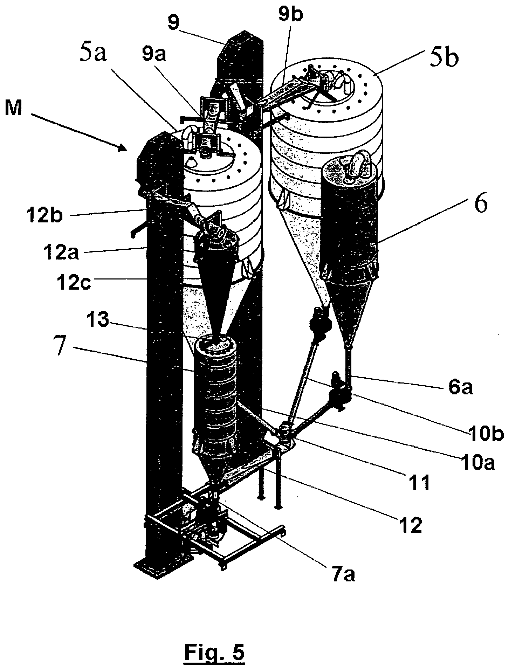

Utilising the theory above and a mixer in accordance with that, a mixing station M is set up as shown in Figure 5. The mixing station in accordance to this example has two main mixers 5a, 5b that receives the most segregating bulk solids from a vertical conveyor 9, via inlet conveying means 9a, 9b. In this example crushed bath is the most segregating bulk solids. The mixers are of the same type as described in the previous example (Fig. 2-4).

The mixers are operated in such a way that when 5a is being filled, mixer 5b is in its discharge mode. This operational method is essential to make the multi chamber mixer concept work. This because it has been observed that filling the mixer while it is in discharging modus will disturb an optimal operation of the silo with regard to homogenisation.

Materials from mixer 5a or 5b via discharge conveying means 10a, 10b are then in proper ratio filled together with less segregating powder such as primary and/or secondary alumina transported from a silo 6 via conveying means 6a into a conveying system 12, 12a, 12b, 12c. The conveying system comprises a horizontal conveyor 12, a vertical conveyor 12a, one inlet conveying means 12b and one hopper reservoir 12c. The outlet 13 of the hopper reservoir conveys the material into a gravimetric mixer 7. The mixer 7 is working by the principles of the above described multi chambered silo, and is discharged in accordance with the mass flow principle. In operation, the mixer 7 is filled completely up. It is discharged completely for further transport into the process.

**Claims**

1. A method for mixing bulk solid material, more precisely for mixing at least two materials (A, B) where at least one of these materials (A) has variations in particle size distribution, and whereby said material (A) is homogenised in a first gravimetric mixer (5a, 5b) with plural chambers (4, 4'), the material (A) is entered into a central filling tube (1) of the mixer (5a, 5b) and then into each chamber (4, 4'), via several openings or slots in the filling tube facing said chambers (4, 4'),
   **characterised in that**
   there is one opening or slot (8, 8') in the filling tube (1) for each respective chamber (4, 4') for allowing the material (A) to flow into said chamber, wherein the said openings or slots (8, 8') extend from the same vertical level at the upper part of the filling tube and downwards to different vertical levels, wherein the material entered into the central filling tube (1) is filled successively into said chambers before being discharged in accordance to the mass flow principle, and mixed together with material (B) in a second mixer (7).

2. A method in accordance to claim 1, **characterised in that**
   the materials (A) and (B) are mixed in a gravimetric mixer (7).

3. A method in accordance to claim 2, **characterised in that**
   the materials are mixed in a mixer (7) with plural chambers and is further discharged in accordance to the mass flow principle.

4. A method in accordance to claim 1,
   **characterised in that**
   the material (A) is substantially crushed bath material.

5. A method in accordance to claim 1, **characterised in that** material (A) is mixed with material (B), which is primary and/or secondary alumina, to produce anode cover material (ACM).

6. A mixing station (M) for bulk solid materials, more precisely for mixing at least two materials (A, B) where at least one of these materials (A) has variations in particle size distribution, comprising a first mixer (5a, 5b) which is a gravimetric mixer formed as a silo with an upper part having plural chambers (4, 4'), the mixer (5a, 5b) further having a central filling tube (1) provided with several openings or slots (8, 8') with various extensions towards the said chambers (4, 4'), where the material (A) is fed into said chambers for homogenisation of the material (A),
   **characterised in that**
   there is one opening or slot (8, 8') in the filling tube (1) for each respective chamber (4, 4'), and where the said openings or slots (8, 8') extend from the same vertical level at the upper part of the filling tube and downwards to different vertical levels, where the material (A) is entered into the central filling tube (1) and further successively to each chamber through said openings (8, 8'), before being discharged and entered into a second mixer (7) for mixing material (A) with material (B), the mixers being of a mass flow type.

7. A mixing station in accordance to claim 6, **characterised in that** the mixer (5a, 5b) comprises a converging lower part with an outlet and further being provided with static flow promoters inside.

8. A mixing station in accordance to claim 6, **characterised in that**
the second mixer (7) is a gravimetric mixer formed as a silo with an upper part having plural chambers where the material is fed subsequently into said chambers.

9. A mixing station in accordance to claim 8, **characterised in that**
the second mixer (7) comprises a converging lower part with an outlet and further being provided with static flow promoters inside.

10. A mixing station in accordance to claim 6, **characterised in that**
the station comprises a third mixer (6) for homogenisation of material (B) before mixing with material (A).


**Patentansprüche**

1. Verfahren zum Mischen von Feststoffmaterial, genauer zum Mischen von mindestens zwei Materialien (A, B), wobei mindestens eines dieser Materialien (A) Variationen in einer Partikelgrößenverteilung aufweist und wodurch das Material (A) in einem ersten gravimetrischen Vermischer (5a, 5b) mit mehreren Kammern (4, 4') homogenisiert wird, das Material (A) in ein zentrales Füllrohr (1) des Vermischers (5a, 5b) und dann über mehrere Öffnungen oder Schlitze in dem Füllrohr, welche den Kammern (4, 4') gegenüber stehen, in jede Kammer (4, 4') gegeben wird, **dadurch gekennzeichnet, dass**
es eine Öffnung oder einen Schlitz (8, 8') in dem Füllrohr (1) für jede jeweilige Kammer (4, 4') gibt, um dem Material (A) zu ermöglichen, in die Kammer zu strömen, wobei sich die Öffnungen oder die Schlitze (8, 8') von der gleichen vertikalen Ebene an dem oberen Teil des Füllrohrs und abwärts auf verschiedene vertikale Ebenen erstrecken, wobei das Material, welches in das zentrale Füllrohr (1) gegeben wird, nacheinander in die Kammern gefüllt wird, bevor es gemäß dem Massenstromprinzip ausgegeben wird und in einem zweiten Vermischer (7) zusammen mit Material (B) vermischt wird.

2. Verfahren nach Anspruch 1,
**dadurch gekennzeichnet, dass**
die Materialien (A) und (B) in einem gravimetrischen Vermischer (7) vermischt werden.

3. Verfahren nach Anspruch 2,
**dadurch gekennzeichnet, dass**
die Materialien in einem Vermischer (7) mit mehreren Kammern vermischt werden und ferner nach dem Massenstromprinzip ausgegeben werden.

4. Verfahren nach Anspruch 1,
**dadurch gekennzeichnet, dass**
das Material (A) im Wesentlichen zerstoßenes Badmaterial ist.

5. Verfahren nach Anspruch 1,
**dadurch gekennzeichnet, dass**
Material (A) mit Material (B) vermischt wird, welches Primär- und/oder Sekundäralumina ist, um Anodendeckmaterial (ACM) zu produzieren.

6. Mischstation (M) für Feststoffmaterialien, genauer zum Mischen von mindestens zwei Materialien (A, B), wobei mindestens eines dieser Materialien (A) Variationen in einer Partikelgrößenverteilung aufweist, einen ersten Vermischer (5a, 5b) umfassend, welcher ein gravimetrischer Vermischer ist, welcher als ein Silo mit einem oberen Teil mit mehreren Kammern (4, 4') ausgebildet ist, wobei der Vermischer (5a, 5b) ferner ein zentrales Füllrohr (1) aufweist, welches mit mehreren Öffnungen oder Schlitzen (8, 8') mit verschiedenen Erweiterungen hin zu den Kammern (4, 4') versehen ist, wobei das Material (A) zur Homogenisierung des Materials (A) in die Kammern gespeist wird, **dadurch gekennzeichnet, dass**
es eine Öffnung oder einen Schlitz (8, 8') in dem Füllrohr (1) für jede jeweilige Kammer (4, 4') gibt, und wobei sich die Öffnungen oder die Schlitze (8, 8') von der gleichen vertikalen Ebene an dem oberen Teil des Füllrohrs und abwärts auf verschiedene vertikale Ebenen erstrecken, wo das Material (A) in das zentrale Füllrohr (1) und ferner nacheinander durch die Öffnungen (8, 8') in jede Kammer gegeben wird, bevor es ausgegeben und in einen zweiten Vermischer (7) zum Mischen von Material (A) mit Material (B) gegeben wird, wobei die Vermischer von einem Massenstromtyp sind.

**7.** Mischstation nach Anspruch 6,
**dadurch gekennzeichnet, dass**
der Vermischer (5a, 5b) einen zusammenlaufenden unteren Teil mit einem Auslass umfasst und ferner im Inneren mit statischen Stromaktivatoren versehen ist.

**8.** Mischstation nach Anspruch 6,
**dadurch gekennzeichnet, dass**
der zweite Vermischer (7) ein gravimetrischer Vermischer ist, welcher als ein Silo mit einem oberen Teil mit mehreren Kammern ausgebildet ist, wo das Material nachfolgend in die Kammern gespeist wird.

**9.** Mischstation nach Anspruch 8,
**dadurch gekennzeichnet, dass**
der zweite Vermischer (7) einen zusammenlaufenden unteren Teil mit einem Auslass umfasst und ferner im Inneren mit statischen Stromaktivatoren versehen ist.

**10.** Mischstation nach Anspruch 6,
**dadurch gekennzeichnet, dass**
die Station einen dritten Vermischer (6) zum Homogenisieren des Materials (B) umfasst, bevor es mit Material (A) vermischt wird.

## Revendications

**1.** Procédé destiné au mélange de matériau solide en vrac, précisément destinée au mélange d'au moins deux matériaux (A, B) où au moins un de ces matériaux (A) présente des variations en termes de distribution de taille de particules, et selon lequel ledit matériau (A) est homogénéisé dans un premier mélangeur gravimétrique (5a, 5b) muni de plusieurs chambres (4, 4'), le matériau (A) est inséré dans un tube de remplissage central (1) du mélangeur (5a, 5b) et ensuite dans chaque chambre (4, 4'), par l'intermédiaire de nombreuses ouvertures ou fentes situées dans le tube de remplissage faisant face auxdites chambres (4, 4'),
**caractérisé en ce que**
il existe une ouverture ou une fente (8, 8') située dans le tube de remplissage (1) pour chaque chambre respective (4, 4') pour permettre au matériau (A) de s'écouler dans ladite chambre, dans lequel lesdites ouvertures ou fentes (8, 8') s'étendent à partir du même niveau vertical au niveau de la partie supérieure du tube de remplissage et vers le bas à différents niveaux verticaux, dans lequel le matériau inséré dans le tube de remplissage central (1) est rempli de manière successive dans lesdites chambres avant d'être déchargé en accord avec le principe de débit massique, et mélangé conjointement au matériau (B) dans un deuxième mélangeur (7).

**2.** Procédé selon la revendication 1, **caractérisé en ce que** les matériaux (A) et (B) sont mélangés dans un mélangeur gravimétrique (7).

**3.** Procédé s selon la revendication 2, **caractérisé en ce que** les matériaux sont mélangés dans un mélangeur (7) équipé de nombreuses chambres et est en outre déchargé en accord avec le principe de débit massique.

**4.** Procédé selon la revendication 1, **caractérisé en ce que** le matériau (A) est sensiblement un matériau concassé de bain.

**5.** Procédé selon la revendication 1, **caractérisé en ce que** le matériau (A) est mélangé au matériau (B), qui est de l'alumine primaire et/ou secondaire, afin de produire un matériau de couverture d'anode (ACM).

**6.** Station de mélange (M) destinée à des matériaux solides en vrac, plus précisément destinée au mélange d'au moins deux matériaux (A, B) où au moins un de ces matériaux (A) présente des variations en termes de distribution de taille de particules, comprenant un premier mélangeur (5a, 5b) qui est un mélangeur gravimétrique formé en tant qu'un silo muni d'une partie supérieure présentant de nombreuses chambres (4, 4'), le mélangeur (5a, 5b) ayant en outre un tube de remplissage central (1) équipé de nombreuses ouvertures ou fentes (8, 8') présentant de nombreuses extensions en direction desdites chambres (4, 4'), où le matériau (A) est alimenté dans lesdites chambres pour une homogénéisation du matériau (A),
**caractérisée en ce que**
il existe une ouverture ou une fente (8, 8') située dans le tube de remplissage (1) pour chaque chambre respective (4, 4'), et où lesdites ouvertures ou fentes (8, 8') s'étendent à partir du même niveau vertical au niveau de la partie supérieure du tube de remplissage et vers le bas à différents niveaux verticaux, dans lequel le matériau (A) est inséré dans le tube de remplissage central (1) et en outre de manière successive dans chaque chambre à travers lesdites ouvertures (8, 8'), avant d'être déchargé et inséré dans un deuxième mélangeur (7) destiné au mélange du matériau (A) avec le matériau (B), les mélangeurs étant d'un type de débit massique.

7. Station de mélange selon la revendication 6, **caractérisée en ce que** le mélangeur (5a, 5b) comprend une partie inférieure convergente équipée d'une sortie et est en outre équipé à l'intérieur de promoteurs d'écoulement statique.

8. Station de mélange selon la revendication 6, **caractérisée en ce que** le deuxième mélangeur (7) est un mélangeur gravimétrique formé en tant qu'un silo muni d'une partie supérieure présentant de nombreuses chambres où le matériau est ultérieurement alimenté dans lesdites chambres.

9. Station de mélange selon la revendication 8, **caractérisée en ce que** le deuxième mélangeur (7) comprend une partie inférieure convergente équipée d'une sortie et est en outre équipé à l'intérieur de promoteurs d'écoulement statique.

10. Station de mélange selon la revendication 6, **caractérisée en ce que** la station comprend un troisième mélangeur (6) destiné à une homogénéisation du matériau (B) avant son mélange avec le matériau (A).

**Fig. 1**

**Fig. 2**

**Fig. 3a**

**Fig. 3b**

**Fig . 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 912248 A1
- DE 3607485 A1
- US 4818117 A
- US 2455572 A

**Non-patent literature cited in the description**

- **ANDREW W. JENIKE.** Gravity Flow of Bulk Solids, Bulletin. Utah University, 1961, 108